(19) Europäisches Patentamt

European Patent Office

Office européen des brevets

(11) EP 1 215 796 A2

(12) EUROPEAN PATENT APPLICATION

(43) Date of publication:
19.06.2002 Bulletin 2002/25

(51) Int Cl.7: H02J 7/00

(21) Application number: 01310325.4

(22) Date of filing: 11.12.2001

(84) Designated Contracting States:
AT BE CH CY DE DK ES FI FR GB GR IE IT LI LU
MC NL PT SE TR
Designated Extension States:
AL LT LV MK RO SI

(30) Priority: 12.12.2000 JP 2000377780

(71) Applicants:
• NGK INSULATORS, LTD.
Nagoya-City, Aichi Prefecture 467-8530 (JP)

• The Tokyo Electric Power Co., Inc.
Tokyo 100-0011 (JP)

(72) Inventor: Mima, Toshiyuki
Nagoya-city, Aichi-prefecture 467-8530 (JP)

(74) Representative: Paget, Hugh Charles Edward et al
MEWBURN ELLIS
York House
23 Kingsway
London WC2B 6HP (GB)

(54) Method for running electric energy storage system

(57) There is provided a method for running an electric energy storage system which is set up at an electric energy consumer and capable of controlling an electric energy to be purchased by the electric energy consumer by controlling charge and discharge. A running pattern of charge and discharge of the electric energy storage system is previously programmed, and the run of the electric energy storage system is controlled on the basis of the previously programmed running pattern. The method for running an electric energy storage system can minimize a total electric fee by comparing an electric fee arranged by an electric energy supplier with the situation of a power load required by an electric energy consumer in running the electric energy storage system.

FIG.8

System flow from setting up to storage system operation of electric energy

**Description**

Background of the Invention and Related Art Statement

The present invention relates to a method for effectively running an electric energy storage system, e.g. a secondary battery, which is set up at an electric energy consumer and capable of controlling an electric energy to be purchased by the electric energy consumer by controlling charge and discharge.

A demand for electric energy has recently been increasing to a great extent in accordance with the development in domestic electrification, the spread of personal computer, etc. On the other hand, increase in gross output of electric energy has become dull because of a request that a global warming phenomenon due to carbon dioxide discharged from a thermoelectric power plant is suppressed, etc. In addition, effective running of electric energy equipment and reduction in an investment in equipment for power transmission and power supply as well as load-leveling of electric energy has strongly been required.

From the above background, various electric energy storage systems have been proposed, and a sodium sulfur battery (hereinbelow referred to as a NAS battery) is a typical one.

It is natural that an actual electric energy consumption by an electric energy consumer should change momentarily depending on a power load of equipment and a pattern for living of the electric energy consumer.

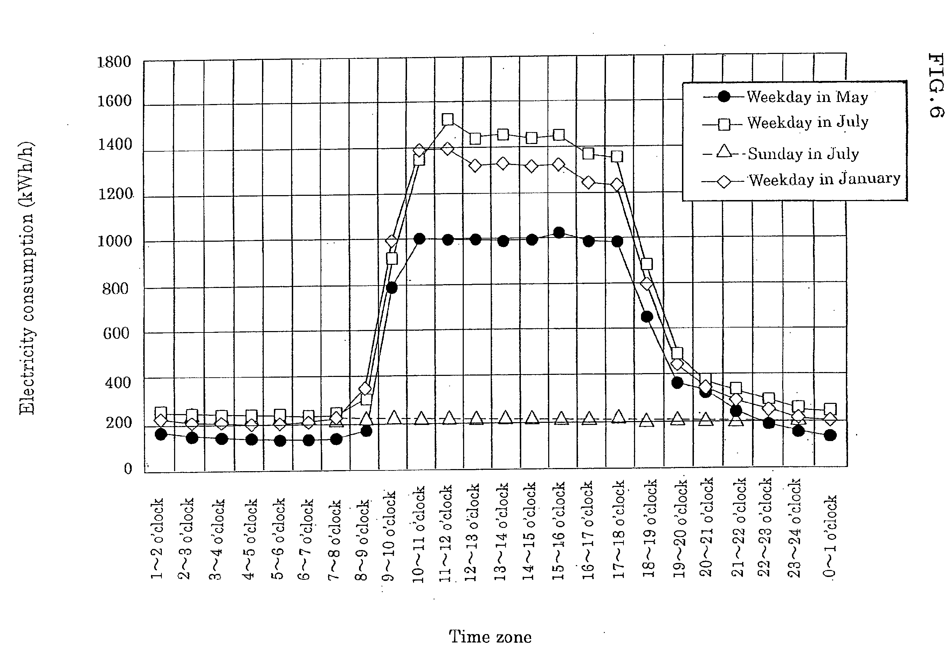

Typical changes on standing in electric energy consumption in an office building are shown in Table 1 and Fig. 6.

Table 1

| [Electric energy consumption in an office building (unit: kWh/h)] | | | | |
|---|---|---|---|---|
| | May (weekday) | July (weekday) | July (Sunday) | January (weekday) |
| 1 - 2 o'clock | 163 | 249 | 241 | 227 |
| 2 - 3 o'clock | 140 | 238 | 240 | 204 |
| 3 - 4 o'clock | 140 | 235 | 235 | 201 |
| 4 - 5 o'clock | 135 | 231 | 230 | 185 |
| 5 - 6 o'clock | 130 | 231 | 232 | 198 |
| 6 - 7 o'clock | 133 | 228 | 235 | 208 |
| 7 - 8 o'clock | 135 | 235 | 232 | 214 |
| 8 - 9 o'clock | 173 | 312 | 235 | 356 |
| 9 - 10 o'clock | 798 | 924 | 240 | 1003 |
| 10 - 11 o'clock | 1008 | 1355 | 235 | 1393 |
| 11- 12 o'clock | 1005 | 1526 | 238 | 1395 |
| 12 - 13 o'clock | 1002 | 1446 | 237 | 1322 |
| 13 - 14 o'clock | 999 | 1460 | 232 | 1334 |
| 14 - 15 o'clock | 1005 | 1442 | 238 | 1318 |
| 15 - 16 o'clock | 1029 | 1460 | 234 | 1334 |
| 16 - 17 o'clock | 993 | 1376 | 235 | 1258 |
| 17 - 18 o'clock | 996 | 1362 | 241 | 1245 |
| 18 - 19 o'clock | 672 | 896 | 228 | 819 |
| 19 - 20 o'clock | 384 | 508 | 230 | 464 |
| 20 - 21 o'clock | 345 | 385 | 228 | 352 |
| 21 - 22 o'clock | 265 | 350 | 233 | 300 |
| 22 - 23 o'clock | 205 | 308 | 232 | 264 |
| 23 - 24 o'clock | 173 | 270 | 231 | 231 |

Table 1   (continued)

| [Electric energy consumption in an office building (unit: kWh/h)] | | | | |
|---|---|---|---|---|
| | May (weekday) | July (weekday) | July (Sunday) | January (weekday) |
| 0 - 1 o'clock | 158 | 256 | 235 | 219 |
| Total | 12184 | 17276 | 5627 | 16045 |
| Max. | 1029 | 1526 | 241 | 1395 |
| Min. | 130 | 228 | 228 | 185 |

Since almost no one stays in this building in the nighttime, electric energy consumption at night is less in comparison with daytime. In addition, since a cooling load increases in daytime in summer, electric energy consumption sharply increases particularly in daytime in summer. In winter, since a heating load increases similarly, electric energy consumption in daytime increases. Further, since almost no one stays in the office on Saturday, Sunday, national holidays, or during the end and the beginning of the year, or the like, electric energy consumption is as little as in nighttime of a weekday all day long.

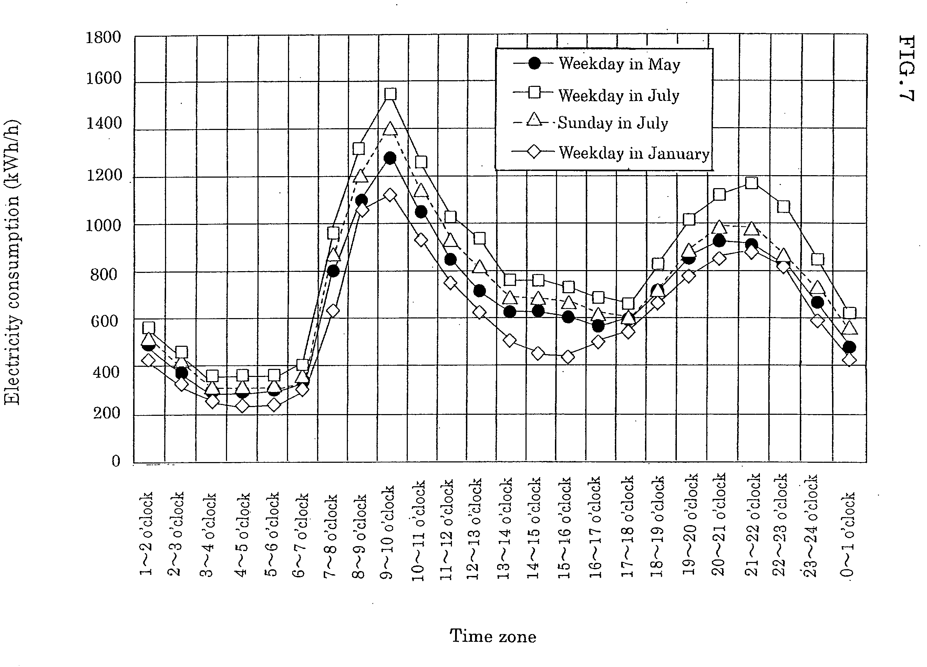

Changes on standing in electric energy consumption in a tap water-supplying establishment are shown in Table 2 and Fig. 7.

Table 2

| [Electric energy consumption in a tap water-supplying establishment (unit: kWh/h)] | | | | |
|---|---|---|---|---|
| | May (weekday) | July (weekday) | July (Sunday) | January (weekday) |
| 1- 2 o'clock | 482 | 560 | 523 | 423 |
| 2 - 3 o'clock | 367 | 456 | 434 | 325 |
| 3 - 4 o'clock | 294 | 352 | 323 | 250 |
| 4 - 5 o'clock | 294 | 352 | 323 | 225 |
| 5 - 6 o'clock | 294 | 352 | 323 | 235 |
| 6 - 7 o'clock | 334 | 401 | 368 | 300 |
| 7 - 8 o'clock | 810 | 972 | 891 | 650 |
| 8 - 9 o'clock | 1104 | 1325 | 1214 | 1075 |
| 9 - 10 o'clock | 1286 | 1543 | 1415 | 1125 |
| 10 - 11 o'clock | 1053 | 1264 | 1158 | 941 |
| 11 - 12 o'clock | 861 | 1033 | 947 | 767 |
| 12 - 13 o'clock | 729 | 948 | 838 | 645 |
| 13 - 14 o'clock | 638 | 766 | 702 | 525 |
| 14 - 15 o'clock | 638 | 766 | 702 | 465 |
| 15 - 16 o'clock | 618 | 741 | 679 | 451 |
| 16 - 17 o'clock | 577 | 693 | 635 | 512 |
| 17 - 18 o'clock | 600 | 668 | 613 | 556 |
| 18 - 19 o'clock | 712 | 829 | 734 | 678 |
| 19 - 20 o'clock | 867 | 1014 | 897 | 782 |
| 20 - 21 o'clock | 928 | 1119 | 990 | 862 |
| 21 - 22 o'clock | 910 | 1163 | 988 | 892 |
| 22 - 23 o'clock | 835 | 1063 | 875 | 812 |
| 23 - 24 o'clock | 671 | 850 | 734 | 590 |

Table 2   (continued)

| [Electric energy consumption in a tap water-supplying establishment (unit: kWh/h)] | | | | |
|---|---|---|---|---|
| | May (weekday) | July (weekday) | July (Sunday) | January (weekday) |
| 0 - 1 o'clock | 478 | 623 | 576 | 434 |
| Total | 16379 | 19853 | 17881 | 14520 |
| Max. | 1286 | 1543 | 1415 | 1125 |
| Min. | 294 | 352 | 323 | 225 |

The main power load in this tap water-supplying establishment is a motive power for running a water supply pump for directly supplying water to water consumers. Since water consumption increases in time zones for cooking and laundering in the morning, for cooking in the evening, and for bathing at night; an electric power for running the pump is required, and electric energy consumption in the time zones increases. In addition, the electric energy consumption is relatively low in the afternoon, where water consumption is high. Further, almost no electric energy is used in the midnight time zones. With regard to a seasonal variation of electric energy consumption, electric energy consumption is relatively high in summer, and low in winter. Though electric energy consumption has a seasonal variation, there is no great difference between weekdays and holidays in one season.

As obvious from these two examples, electric energy consumption though a year generally varies to a great extent depending on an electric energy consumer. The present situation is that an electric energy consumer selects an electric fee system from various electric fee systems arranged by an electric energy supplier, or the like, so that the electric fee may become minimum.

By the way, the electric fee systems of an electric power company are very complex and set up in detail depending on voltage (low voltage, high voltage, particularly high voltage, etc.) supplied to an electric energy consumer, the principal power load (electric energy for business consumption in an office or the like, or electric energy for industrial consumption mainly for a motive power load in a factory or the like), and so on.

An electric fee is generally composed of a basic fee [unit fee per kW], which determines the upper limit of consumable electric energy, and a total of monthly electric energy consumption fee [for kWh].

An example of electric fee systems arranged by an electric power company is shown below.

An electric power company arranges for various systems for an economical electric fee by load-leveling.

For example, differences in electric fee are given among seasons and time zones. The differences are hereinbelow described on reference to a list of charges in 2000 by Tokyo Electric Power Company. Table 3 shows an electric fee system arranged for high-voltage electric energy consumer with 6600 V.

## Table 3

### [Charge System for High-Voltage Electricity B by Tokyo Electric Power]

| Seasons classification based charge | Basic fee [¥/kW/month] | Electric energy consumption fee [¥/kWh] | |
|---|---|---|---|
| | | Summer | The other seasons |
| High-voltage electricity B | 1650 | 10.35 | 9.40 |
| High-voltage electricity B2 | 1850 | 9.89 | 8.99 |
| Remarks | | June – September | October - May |

| Seasons and time zones classification based charge | Basic fee [¥/kW/month] | Electric energy consumption fee [¥/kWh] | | | |
|---|---|---|---|---|---|
| | | Peak time | Daytime | | Nighttime |
| | | | Summer | The other seasons | |
| Seasons and time zones classification based high-voltage electricity B | 1650 | 14.75 | 13.30 | 11.95 | 6.15 |
| Seasons and time zones classification based high-voltage electricity B2 | 1850 | 13.81 | 12.44 | 11.23 | 6.15 |
| Remarks | | 13 – 16 o'clock in weekday in June – September | 8 – 13 and 16 – 22 o'clock in weekday in June - September | 8 – 22 o'clock in weekday in October – May | Sunday, national holiday, designated day, and 22 – 8 o'clock in weekday |

EP 1 215 796 A2

An electric energy consumption fee [for kWh] in the standard charge differs in unit fee between summer (four months from June to September) and in the other seasons (from October to May). In the charge system classified by seasons and time zones, charges are set up in more detail: the peak time zone (13 - 16 o'clock), the summer daytime zone (8 - 13 o'clock and 16 - 22 o'clock), and the nighttime zone (22 - 6 o'clock) in summer; and the daytime zone (8 - 22 o'clock) and the nighttime zone (22 - 6 o'clock) in the other seasons (from October to May). A unit fee for electric energy consumption descends in the order of peak time, daytime in summer, daytime in the other seasons, and nighttime. This aims to promote load-leveling among electric energy consumers by setting up a high unit fee for electric energy consumption in a time zone having generally large electric energy consumption and a large load on equipment for generating electric energy, and a low unit fee for electric energy consumption in a nighttime zone having a small load on equipment for generating electric energy.

In addition, for an electric energy consumer having high electric energy consumption, a special charge system is arranged, in which a total electric fee is cheap because a unit electric consumption fee is low even though a unit basic fee is high from a charge system classified by seasons and time zones. This is an example, and other electric power companies have the similar charge system.

Therefore, how to run the electric energy storage system is important to minimize a total electric fee for the situation for using a business electric source in the case that an electric energy storage system is set up at such an electric consumer.

Summary of the Invention

The present invention has been made in view of the aforementioned conventional problem and aims to provide a method for running an electric energy storage system capable of minimizing a total electric fee by comparing an electric fee arranged by an electric energy supplier with the situation of an electric energy load required by an electric energy consumer in setting up an electric energy storage system at the electric energy consumer and in running the electric energy storage system.

According to the present invention, there is provided a method for running an electric energy storage system which is set up at an electric energy consumer and capable of controlling an electric energy to be purchased by the electric energy consumer by controlling charge and discharge, wherein a running pattern of charge and discharge of the electric energy storage system is previously programmed, and the running of the electric energy storage system is controlled on the basis of the previously programmed running pattern.

In a method for running an electric energy storage system according to the present invention, it is preferable that the programmed running pattern is input in a computer-control means to control the running of the electric energy storage system by the computer-control means on the basis of the programmed running pattern.

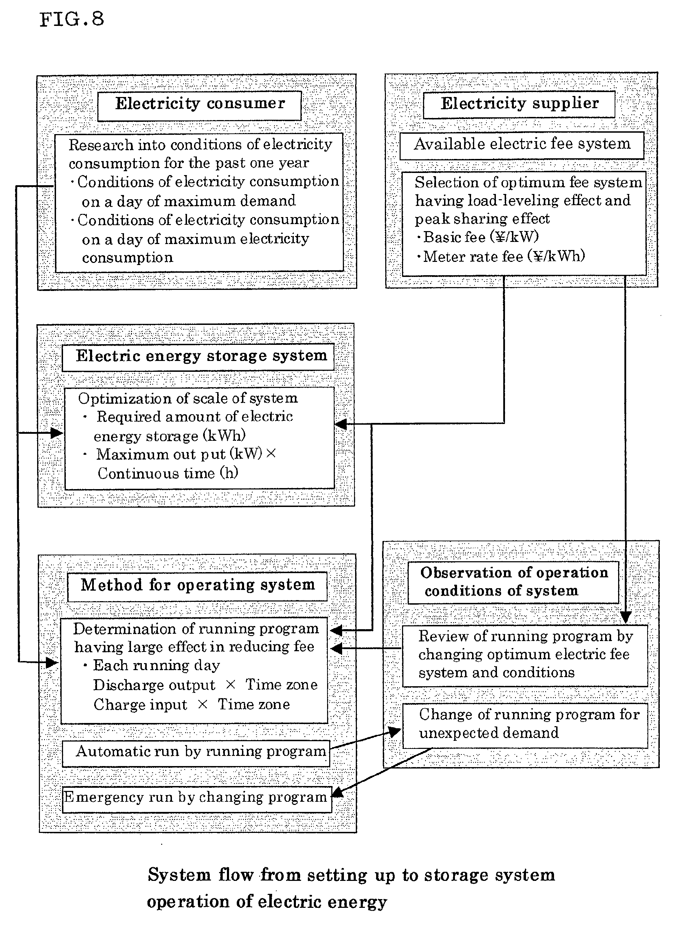

In addition, it is preferable that the running pattern is programmed so that a consumption rate of electric energy stored in the electric energy storage system becomes 80% or more. Furthermore, it is preferable that an electric fee is always optimized by observing information on purchase of electric power by the electric energy consumer with a communication means and giving instruction to correct running conditions of the electric power storage system. Based on this concept, Fig. 8 shows the concept with regard to optimization of a scale of the electric energy storage system to be set up, determination of a method of running for reducing the electric fee, correction of a method of running the electric energy storage system corresponding to unexpected consumption of electric energy, and a method of running the electric energy storage system for a long period of time.

According to the present invention, there is further provided a method for running an electric energy storage system which is set up at an electric energy consumer and capable of controlling an electric energy to be purchased by the electric energy consumer by controlling charge and discharge, comprising the steps of:

a. researching into conditions of electric energy consumption (purchased amount of electric energy) by the electric energy consumer for a predetermined period so as to be used as base data,
b. researching into an electric fee system which is arranged by an electric energy supplier and which the electric energy consumer can use and investigate an effect on an electric fee by load-leveling to select the optimum electric fee system,
c. determining a scale of the electric energy storage system to be introduced on the basis of a date set for a contract electricity before the electric energy storage system is introduced, conditions of electric energy consumption on the day having the maximum load, a date having the highest peak of electric energy consumption, and a specification of the electric energy storage system expected to be introduced,
d. determining a running program for discharging the electric energy storage system in a time zone for high consumption of electric energy and for a high unit fee for consumed electric energy so as to reduce a purchased amount of electric energy and for charging the electric energy storage system in a time zone for a low unit fee for consumed electric energy, and

e. running the electric energy storage system on the basis of the running program.

In the above method for running an electric energy storage system, it is preferable that the running program for the electric energy storage system is input to a computer-control means to run the electric energy storage system by the computer-control means on the basis of the running program.

In addition, in the above method for running an electric energy storage system, a scale of the electric energy storage system and the running program are preferably determined so that a consumption rate of electric energy stored in the electric energy storage system becomes 80% or more. Furthermore, it is preferable an electric fee is always optimized by observing information on purchase of electric power by the electric energy consumer with a communication means and giving instruction to correct running conditions of the electric power storage system.

In the present invention, it is preferable that a scale of the electric energy storage system to be introduced is determined so that an electric energy consumption peak is not generated by shaving the electric energy consumption peak in a time zone having the highest peak of electric energy consumption peak in a situation of electric energy consumption by the electric energy consumer by increasing an amount of consumable electric energy by discharge running of the electric energy storage system and by charge running of the electric energy storage system in the other time zone. It is also preferable that a scale of the electric energy storage system to be introduced is determined so that an electric fee is reduced by increasing a rate of electric energy purchased by the electric energy consumer in a night time zone by discharge running of the electric energy storage system in a daytime zone and charge running of the electric energy storage system in a nighttime zone.

Incidentally, in the aforementioned method, the electric energy storage system is preferably a system using a sodium sulfur battery.

Brief Description of the Drawings

Fig. 1 is a graph showing changes in electric energy consumption before and after an electric energy storage system of rating 500kW × 7.2h is introduced into a tap water-supplying establishment.

Fig. 2 is a graph showing changes in electric energy consumption before and after an electric energy storage system of rating 300kW × 7.2h is introduced into a tap water-supplying establishment.

Fig. 3 is a graph showing an example of running pattern for an electric energy storage system maintaining a contract electricity of 1000kW in a summer holiday.

Fig. 4 is a graph showing an example of running pattern for an electric energy storage system maintaining a purchased electricity of 1000kW in a weekday in May.

Fig. 5 is a graph showing an example of running pattern for an electric energy storage system maintaining a purchased electricity of 1000kW in a weekday in January.

Fig. 6 is a graph showing an example of typical changes on standing in electric energy consumption in an office building.

Fig. 7 is a graph showing an example of typical changes on standing in electric energy consumption in a tap water-supplying establishment.

Fig. 8 is a chart showing a system flow from setting up to operation of an electric energy storage system.

Fig. 9 is a graph showing a running pattern in the case of operating an electric energy storage system of 300kW × 7.2h at the consumption rate of 63.1%.

Fig. 10 is a graph showing a running pattern in the case of operating an electric energy storage system of 300kW × 7.2h at the consumption rate of 45.4%.

Fig. 11 is a graph showing a running pattern in the case of operating an electric energy storage system of 600kW × 7.2h.

Detailed Description of the Invention

The present invention is hereinbelow described in more detail on the basis of embodiments. However, the present invention is by no means limited to the embodiments.

The present invention provides a method for effectively running an electric energy storage system so that a total electric fee may be minimized for using a business electric source in the case that an electric energy storage system is set up at an electric consumer.

It is necessary to optimize a combination of changes in electric energy consumption by the electric energy consumer before and after the electric energy storage system is set up and an electric fee system in order to thus plan to reduce an electric fee by setting up the electric energy storage system at an electric energy consumer.

Since an electric fee is composed of a basic fee [unit fee per kW] and a monthly electric energy consumption fee [for kWh] as described above, it is important to investigate them independently.

Optimization of a scale of an electric energy storage system to be set up in view of optimizing an effect of reducing an electric fee and a concept of a method for running an electric energy storage system to optimize an electric fee after being set up are hereinbelow described with referring to an example of the tap water-supplying establishment shown in Table 2.

Since a contract electricity of the establishment is 1600kW, less than 2000kW, the establishment made a contract of a standard charge of high-voltage electricity B. The contract electricity is determined according to an assumed maximum electric energy consumption per hour through a year. In addition, the reason why the contract of a standard charge was chosen from various charge systems for electric fees shown in Table 3 is that electric energy consumption in a nighttime zone is relatively small and there is no advantage in employing the charge system classified by seasons and time zones.

Operation of an electric energy storage system from a viewpoint of effect in reducing an electric fee is based on reduction of a basic fee by reducing a contract electricity and reduction of an electric energy consumption fee by consuming electric energy in a nighttime zone having a low unit fee for consumed electric energy to raise a nighttime rate. These can be achieved by introducing an electric energy storage system to promote load-leveling.

As barometers of the extent of load-leveling, a load rate through a year and a nighttime rate are defined as follows:

Load rate through a year =

gross electric energy consumption through a year [kWh] /

(contract electricity [kW] $\times$ 365 days $\times$ 24 hours)

Nighttime rate =

electric energy consumption in nighttime zone in a contract [kWh] /

gross electric energy consumption through a year [kWh]

Therefore, for effective reduction in electric fee by introducing and setting up an electric energy storage system, it is necessary to reduce a contract electricity by reducing a basic fee in the first place, and it is necessary to optimize a scale for setting up from this view point.

The first requisite for determining an adequate scale of an electric energy storage system to be introduced is to make the scale so as not to generate a peak by shaving the peak of electric energy consumption in a day having the highest peak of electric energy consumption by increasing the consumable amount of electric energy by the discharge run of the electric energy storage system and by the charge run in the other time zones.

To optimize a contract electricity, the maximum electric energy consumption for at least past one year was investigated. It is proper that the definition of the maximum electric energy consumption at this time is identified with that of the contract electricity. The maximum electric energy consumption is defined by an average electric energy consumption [kWh/h] for a half or one hour. In addition, an expected electric energy consumption after the system is set up is estimated in consideration of a plan for equipment in the establishment.

On the other hand, an adequate scale of the electric energy storage system to be introduced is determined in consideration of a dischargeable amount of electric energy, a period of time for continuing discharge, and a dischargeable amount of electric energy in one running operation from a specification of the electric energy storage system to be introduced.

For example, in the case of this tap water-supplying establishment, the highest peak of electric energy consumption in 1999 was present in a weekday in July, which was 1543 kW/h, and a contract electricity of the last year was 1600 kW. In addition, there is no plan to sharply increase the water supply for a long period of time.

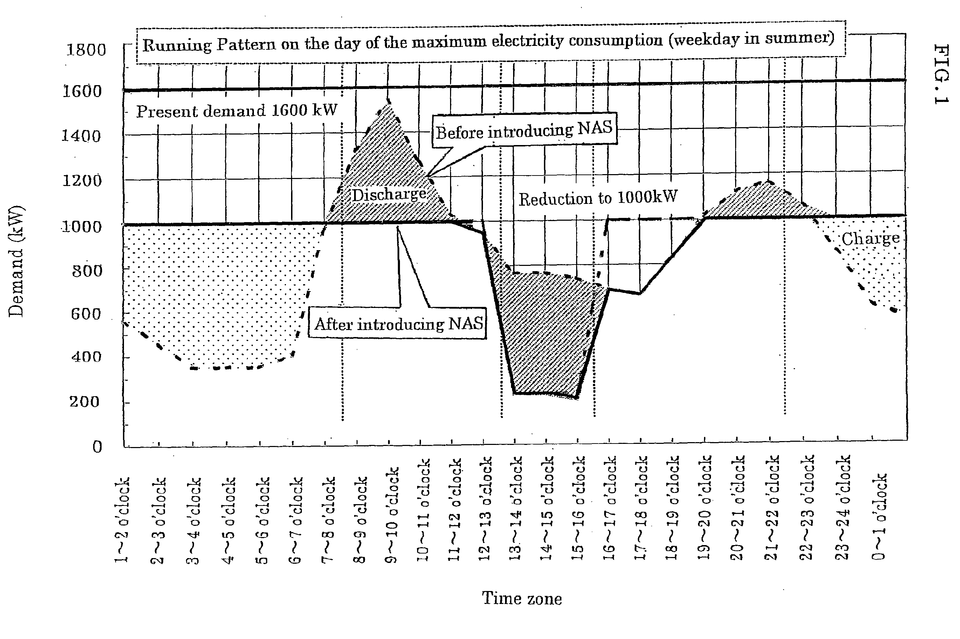

For example, in the case of using an electric energy storage system using a NAS battery and capable of a 8-hour discharge of rated electric energy for an amount of discharged electric energy and a rated 1.2-time discharge $\times$ 3 hours of excessive load discharge as a specification of the system, a contract electricity of 600kW can be reduced by introducing an electric energy storage system of rated 500kW $\times$ 7.2h. This is because a time of duration of the maximum electric energy consumption is short as a characteristic of a power load in this establishment. By running this system, a contract electricity of 600kW can be reduced even in the electric energy storage system of rated 500kW, and a contract electricity can be changed to 1000kW even in the day having the highest peak of electric energy consumption in the last year. Changes before and after the introduction of the electric energy storage system are shown in Table 4 and Fig. 1 on the basis of electric energy consumption in the day having the highest peak of electric energy consumption in 1999.

## Table 4

### [Running pattern of electric energy storage system on the day having the highest peak of electric energy consumption (unit: kWh/h)]
### Electric energy storage system of 500kW × 7.2h

| | Present state | | After introduction of electric energy storage system | | | | |
| --- | --- | --- | --- | --- | --- | --- | --- |
| | Purchased electricity | Unit fee for electricity | Discharged electricity | Charged electricity | Purchased electricity | Unit fee for electricity | |
| 1 – 2 o'clock | 560 | 10.35 | 0 | 440 | 1000 | 6.15 | |
| 2 – 3 o'clock | 456 | 10.35 | 0 | 544 | 1000 | 6.15 | |
| 3 – 4 o'clock | 352 | 10.35 | 0 | 648 | 1000 | 6.15 | |
| 4 – 5 o'clock | 352 | 10.35 | 0 | 648 | 1000 | 6.15 | |
| 5 – 6 o'clock | 352 | 10.35 | 0 | 648 | 1000 | 6.15 | |
| 6 – 7 o'clock | 401 | 10.35 | 0 | 599 | 1000 | 6.15 | |
| 7 – 8 o'clock | 972 | 10.35 | 0 | 28 | 1000 | 6.15 | |
| 8 – 9 o'clock | 1325 | 10.35 | 325 | 0 | 1000 | 13.30 | *1 |
| 9 – 10 o'clock | 1543 | 10.35 | 543 | 0 | 1000 | 13.30 | *1 |
| 10 – 11 o'clock | 1264 | 10.35 | 264 | 0 | 1000 | 13.30 | *1 |
| 11 – 12 o'clock | 1033 | 10.35 | 33 | 0 | 1000 | 13.30 | *1 |
| 12 – 13 o'clock | 948 | 10.35 | 0 | 0 | 948 | 13.30 | |
| 13 – 14 o'clock | 766 | 10.35 | 600 | 0 | 166 | 14.75 | *2 |
| 14 – 15 o'clock | 766 | 10.35 | 600 | 0 | 166 | 14.75 | *2 |
| 15 – 16 o'clock | 741 | 10.35 | 600 | 0 | 141 | 14.75 | *2 |
| 16 – 17 o'clock | 693 | 10.35 | 0 | 0 | 693 | 13.30 | |
| 17 – 18 o'clock | 668 | 10.35 | 0 | 0 | 668 | 13.30 | |
| 18 – 19 o'clock | 829 | 10.35 | 0 | 0 | 829 | 13.30 | |
| 19 – 20 o'clock | 1014 | 10.35 | 14 | 0 | 1000 | 13.30 | *1 |
| 20 – 21 o'clock | 1119 | 10.35 | 119 | 0 | 1000 | 13.30 | *1 |
| 21 – 22 o'clock | 1163 | 10.35 | 163 | 0 | 1000 | 13.30 | *1 |
| 22 – 23 o'clock | 1063 | 10.35 | 63 | 0 | 1000 | 13.30 | *1 |
| 23 – 24 o'clock | 850 | 10.35 | 0 | 150 | 1000 | 6.15 | |
| 0 – 1 o'clock | 623 | 10.35 | 0 | 377 | 1000 | 6.15 | |
| Total [kWh] | 19853 | | 3323 | 4081 | 20611 | | |
| Electric energy consumption fee [×10,000 yen/day ] | | 20.55 | | | | 20.33 | |
| Consumption rate | | | 92.3 | | | | |

*1:  for peak shaving

*2:  for reduction of daytime electric energy

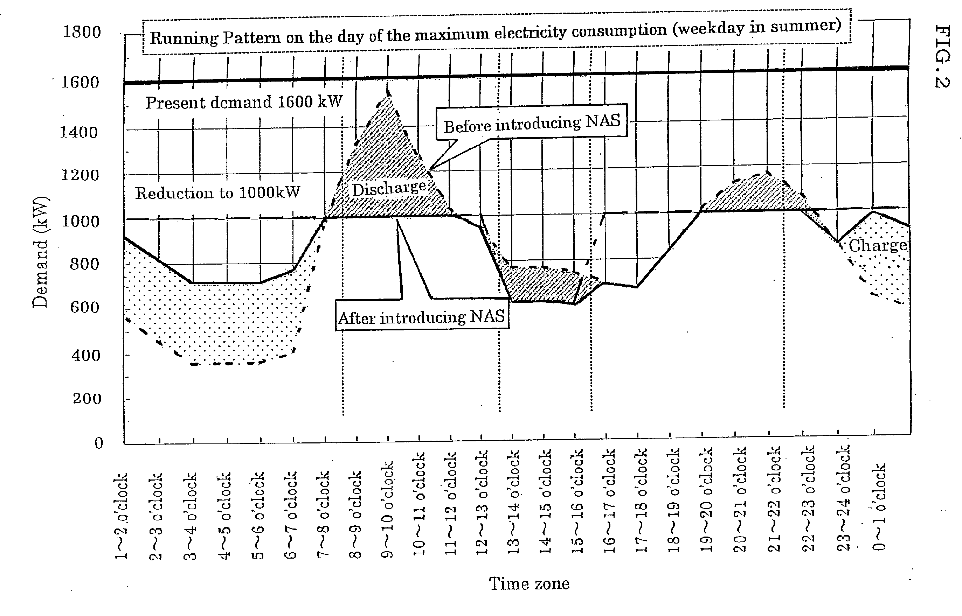

In the case of using an electric energy storage system capable of a 8-hour discharge of rated electric energy for an amount of discharged electric energy and a rated 2-time discharge × 3 hours of excessive load discharge as a specification of the system, a contract electricity of 600kW can be reduced by introducing an electric energy storage system of rating 300kW × 7.2h. Changes before and after the introduction of the electric energy storage system are shown in Table 5 and Fig. 2 on the basis of electric energy consumption in the day having the highest peak of electric energy consumption in 1999.

## Table 5
### [Running pattern 2 of electric energy storage system on the day having the highest peak of electric energy consumption (unit: kWh/h)]
### Electric energy storage system of 300kW × 7.2h

| | Present state | | After introduction of electric energy storage system | | | |
|---|---|---|---|---|---|---|
| | Purchased | Unit fee for | Discharged | Charged | Purchased | Unit fee for |
| 1 – 2 o'clock | 560 | 10.35 | 0 | 360 | 920 | 6.15 |
| 2 – 3 o'clock | 456 | 10.35 | 0 | 360 | 816 | 6.15 |
| 3 – 4 o'clock | 352 | 10.35 | 0 | 360 | 712 | 6.15 |
| 4 – 5 o'clock | 352 | 10.35 | 0 | 360 | 712 | 6.15 |
| 5 – 6 o'clock | 352 | 10.35 | 0 | 360 | 712 | 6.15 |
| 6 – 7 o'clock | 401 | 10.35 | 0 | 360 | 761 | 6.15 |
| 7 – 8 o'clock | 972 | 10.35 | 0 | 28 | 1000 | 6.15 |
| 8 – 9 o'clock | 1325 | 10.35 | 325 | 0 | 1000 | 13.30 |
| 9 – 10 o'clock | 1543 | 10.35 | 543 | 0 | 1000 | 13.30 |
| 10 – 11 o'clock | 1264 | 10.35 | 264 | 0 | 1000 | 13.30 |
| 11 – 12 o'clock | 1033 | 10.35 | 33 | 0 | 1000 | 13.30 |
| 12 – 13 o'clock | 948 | 10.35 | 0 | 0 | 948 | 13.30 |
| 13 – 14 o'clock | 766 | 10.35 | 150 | 0 | 616 | 14.75 |
| 14 – 15 o'clock | 766 | 10.35 | 150 | 0 | 616 | 14.75 |
| 15 – 16 o'clock | 741 | 10.35 | 150 | 0 | 591 | 14.75 |
| 16 – 17 o'clock | 693 | 10.35 | 0 | 0 | 693 | 13.30 |
| 17 – 18 o'clock | 668 | 10.35 | 0 | 0 | 668 | 13.30 |
| 18 – 19 o'clock | 829 | 10.35 | 0 | 0 | 829 | 13.30 |
| 19 – 20 o'clock | 1014 | 10.35 | 14 | 0 | 1000 | 13.30 |
| 20 – 21 o'clock | 1119 | 10.35 | 119 | 0 | 1000 | 13.30 |
| 21 – 22 o'clock | 1163 | 10.35 | 163 | 0 | 1000 | 13.30 |
| 22 – 23 o'clock | 1063 | 10.35 | 63 | 0 | 1000 | 6.15 |
| 23 – 24 o'clock | 850 | 10.35 | 0 | 0 | 850 | 6.15 |
| 0 – 1 o'clock | 623 | 10.35 | 0 | 360 | 983 | 6.15 |
| Total [kWh] | 19853 | | 1973 | 2548 | 20428 | |
| Electric energy | | 20.55 | | | | 20.38 |
| Consumption | | | 91.4 | | | |

Consumption rate    91.4%
(discharged electricity/
  system capacity)

Reduction of contract fee
600kW less    ¥816,000/month

Electric energy consumption fee
(Average of a week)
Before introduction    ¥205,500/day
After introduction    ¥201,200/day
Example of Sunday    ¥125,600/day
Reduction of fee    ¥30,600/day

Effect per system scale
    ¥3,200/kW/month

    ¥949,000/month

Further, in the case of introducing 600kW of an electric energy saving system having the same specification as the example of Table 4, electric energy charged in nighttime zones is insufficient and the electric energy storage system cannot be fully used even if a contract electricity is reduced by 720 kW to make it to be 880 kW with a similar line of thinking as in Table 4. In the case of discharging electric energy for a discharge capacity of the electric energy storage system is discharged in daytime, electric energy charged in nighttime is short by about 2400 kWh. That is, an equipment capacity is excessive. Changes before and after the introduction of the electric energy storage system are shown in Table 6 on the basis of electric energy consumption in the day of the highest peak of electric energy consumption in 1999.

Table 6

| [Running pattern 3 of electric energy storage system on the day having the highest peak of electric energy consumption (unit: kWh/h)] Electric energy storage system of 600kW × 7.2h | | | | | | |
|---|---|---|---|---|---|---|
| | Present state | | After introduction of electric energy storage system | | | |
| | Purchased electricity | Unit fee for electricity | Discharged electricity | Charged electricity | Purchased electricity | Unit fee for electricity |
| 1 - 2 o'clock | 560 | 10.35 | 0 | 320 | 880 | 6.15 |
| 2 - 3 o'clock | 456 | 10.35 | 0 | 424 | 880 | 6.15 |
| 3 - 4 o'clock | 352 | 10.35 | 0 | 528 | 880 | 6.15 |
| 4 - 5 o'clock | 352 | 10.35 | 0 | 528 | 880 | 6.15 |
| 5 - 6 o'clock | 352 | 10.35 | 0 | 528 | 880 | 6.15 |
| 6 - 7 o'clock | 401 | 10.35 | 0 | 479 | 880 | 6.15 |
| 7 - 8 o'clock | 972 | 10.35 | 92 | 0 | 880 | 6.15 |
| 8 - 9 o'clock | 1325 | 10.35 | 445 | 0 | 880 | 13.30 |
| 9 - 10 o'clock | 1543 | 10.35 | 663 | 0 | 880 | - 13.30 |
| 10 - 11 o'clock | 1264 | 10.35 | 384 | 0 | 880 | 13.30 |
| 11 - 12 o'clock | 1033 | 10.35 | 153 | 0 | 880 | 13.30 |
| 12 - 13 o'clock | 948 | 10.35 | 68 | 0 | 880 | 13.30 |
| 13 - 14 o'clock | 766 | 10.35 | 480 | 0 | 286 | 14.75 |
| 14 - 15 o'clock | 766 | 10.35 | 480 | 0 | 286 | 14.75 |
| 15 - 16 o'clock | 741 | 10.35 | 480 | 0 | 261 | 14.75 |
| 16 - 17 o'clock | 693 | 10.35 | 0 | 0 | 693 | 13.30 |
| 17 - 18 o'clock | 668 | 10.35 | 0 | 0 | 668 | 13.30 |
| 18 - 19 o'clock | 829 | 10.35 | 0 | 0 | 829 | 13.30 |
| 19 - 20 o'clock | 1014 | 10.35 | 134 | 0 | 880 | 13.30 |
| 20 - 21 o'clock | 1119 | 10.35 | 239 | 0 | 880 | 13.30 |
| 21 - 22 o'clock | 1163 | 10.35 | 283 | 0 | 880 | 13.30 |
| 22 - 23 o'clock | 1063 | 10.35 | 183 | 0 | 880 | 6.15 |

Table 6   (continued)

| [Running pattern 3 of electric energy storage system on the day having the highest peak of electric energy consumption (unit: kWh/h)] Electric energy storage system of 600kW × 7.2h | | | | | | |
|---|---|---|---|---|---|---|
| | Present state | | After introduction of electric energy storage system | | | |
| | Purchased electricity | Unit fee for electricity | Discharged electricity | Charged electricity | Purchased electricity | Unit fee for electricity |
| 23 - 24 o'clock | 850 | 10.35 | 0 | 30 | 880 | 6.15 |
| 0 - 1 o'clock | 623 | 10.35 | 0 | 257 | 880 | 6.15 |
| Total [kWh] | 19853 | | 4083 | 3093 | 18863 | |
| Electric energy consumption fee [ × 10,000 yen/day ] | 20.55 | | | ↑ Shortage of charged electric energy by 2400kW | | 18.92 |
| Consumption rate | | | 94.5 | | | |

Next, the second requisite to determine an adequate scale for an electric energy storage system to be introduced is that an electric energy consumption fee is reduced by applying fee system classified by seasons and time zones shown in Table 3 with increasing a rate of electric energy in a night time zone in the contract for a purchased amount of electric energy in the establishment by discharge running of the electric energy storage system in a daytime zone and charge running of the electric energy storage system in a nighttime zone.

The concept is described with referring to the electric energy storage system having a capacity of rated 500kW × 7.2 hours shown in Table 4.

In the example of the day having the highest peak of electric energy consumption in 1999, discharged electric energy for peak-shaving (from 8 to 12, and from 19 to 23 o'clock) to reduce a contract electricity to 1000 kW is about 1500 kWh, which cannot make the most of storage capacity. Therefore, it is effective to discharge electric energy in time zones having the highest unit fee in case of employing a charge system classified by seasons and time zones to reduce purchased electricity. A scale is determined so that the peak of demand for electric energy in the day having the highest peak of electric energy consumption in daytime is shaved by a discharge from the electric energy storage system and so that a peak is not generated due to increase in supply of electric energy charged in the other time zones.

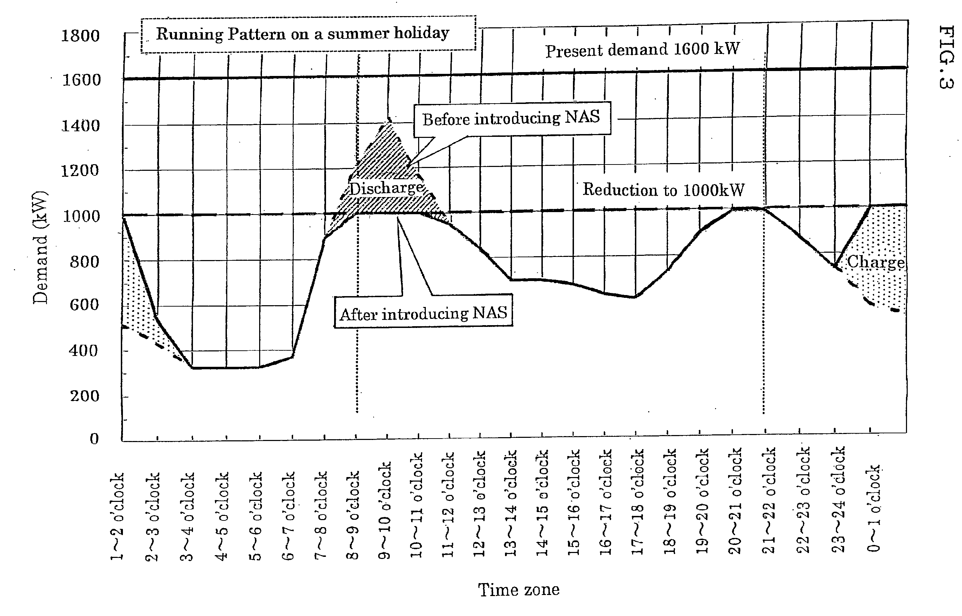

On the other hand, an electric energy storage system on a holiday in July shows a running pattern with which a contract electricity of 1000kW is basically kept. This is because a nighttime fee is applied to all day long in a charge system classified by seasons and time zones as mentioned above. Therefore, the electric energy storage system is automatically run so that purchased electricity is controlled so as to correspond to an electric load above a contract electricity of 1000kW in time zones of 8 - 11 o'clock. An example of running the electric energy storage system is shown in Table 7 and Fig. 3.

Table 7
[Running pattern of electric energy storage system
on summer holiday (unit: kWh/h)]

| | Present state | | After introduction of electric energy storage system | | | | |
|---|---|---|---|---|---|---|---|
| | Purchased electricity | Unit fee for electricity | Discharged electricity | Charged electricity | Purchased electricity | Unit fee for electricity | |
| 1 – 2 o'clock | 5236 | 10.35 | 0 | 477 | 1000 | 6.15 | |
| 2 – 3 o'clock | 434 | 10.35 | 0 | 100 | 534 | 6.15 | |
| 3 – 4 o'clock | 323 | 10.35 | 0 | 0 | 323 | 6.15 | |
| 4 – 5 o'clock | 323 | 10.35 | 0 | 0 | 323 | 6.15 | |
| 5 – 6 o'clock | 352 | 10.35 | 0 | 0 | 323 | 6.15 | |
| 6 – 7 o'clock | 368 | 10.35 | 0 | 0 | 368 | 6.15 | |
| 7 – 8 o'clock | 891 | 10.35 | 0 | 0 | 891 | 6.15 | |
| 8 – 9 o'clock | 1214 | 10.35 | 214 | 0 | 1000 | 6.15 | *1 |
| 9 – 10 o'clock | 1415 | 10.35 | 415 | 0 | 1000 | 6.15 | *1 |
| 10 – 11 o'clock | 1158 | 10.35 | 158 | 0 | 1000 | 6.15 | *1 |
| 11 – 12 o'clock | 947 | 10.35 | 0 | 0 | 947 | 6.15 | |
| 12 – 13 o'clock | 838 | 10.35 | 0 | 0 | 838 | 6.15 | |
| 13 – 14 o'clock | 702 | 10.35 | 0 | 0 | 702 | 6.15 | |
| 14 – 15 o'clock | 702 | 10.35 | 0 | 0 | 702 | 6.15 | |
| 15 – 16 o'clock | 679 | 10.35 | 0 | 0 | 679 | 6.15 | |
| 16 – 17 o'clock | 635 | 10.35 | 0 | 0 | 635 | 6.15 | |
| 17 – 18 o'clock | 613 | 10.35 | 0 | 0 | 613 | 6.15 | |
| 18 – 19 o'clock | 734 | 10.35 | 0 | 0 | 734 | 6.15 | |
| 19 – 20 o'clock | 897 | 10.35 | 0 | 0 | 897 | 6.15 | |
| 20 – 21 o'clock | 990 | 10.35 | 0 | 0 | 990 | 6.15 | |
| 21 – 22 o'clock | 988 | 10.35 | 0 | 0 | 988 | 6.15 | |
| 22 – 23 o'clock | 875 | 10.35 | 0 | 0 | 875 | 6.15 | |
| 23 – 24 o'clock | 734 | 10.35 | 0 | 0 | 734 | 6.15 | |
| 0 – 1 o'clock | 576 | 10.35 | 0 | 424 | 1000 | 6.15 | |
| Total [kWh] | 17881 | | 787 | 1001 | 18905 | | |
| Electric energy consumption fee [×10,000 yen/day ] | | 18.51 | | | | 11.13 | |
| Consumption rate | | | 21.9 | | | | |

*1:   for peak shaving

Since electric energy consumption in the other seasons is less than in summer, it is almost impossible to make the most of a storage function of the electric energy storage system only by compensating the electric force above the contract electricity of 1000kW.

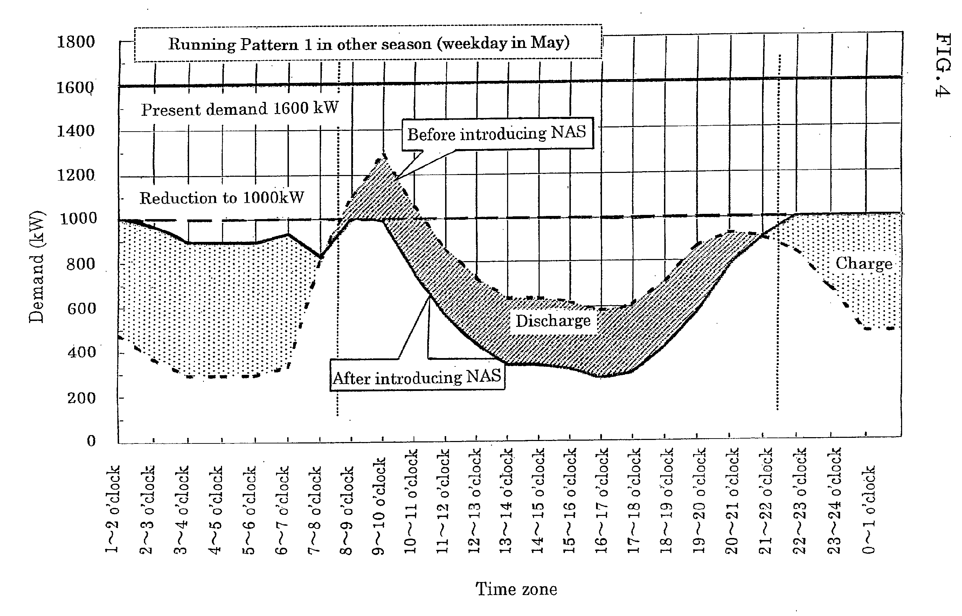

Therefore, it is preferable to reduce purchased electricity in daytime by employing a peak shaving running for maintaining purchased electricity of 1000kW in combination with previously programmed automatic running. An example of running pattern in weekday in May is shown in Table 8 and Fig. 4.

Table 8
[Running pattern of electric energy storage system
in weekday in other season (May) (unit: kWh/h)]

| | Present state | | After introduction of electric energy storage system | | | | |
|---|---|---|---|---|---|---|---|
| | Purchased electricity | Unit fee for electricity | Discharged electricity | Charged electricity | Purchased electricity | Unit fee for electricity | |
| 1 – 2 o'clock | 482 | 9.40 | 0 | 518 | 1000 | 6.15 | |
| 2 – 3 o'clock | 367 | 9.40 | 0 | 600 | 967 | 6.15 | |
| 3 – 4 o'clock | 294 | 9.40 | 0 | 600 | 894 | 6.15 | |
| 4 – 5 o'clock | 294 | 9.40 | 0 | 600 | 894 | 6.15 | |
| 5 – 6 o'clock | 294 | 9.40 | 0 | 600 | 894 | 6.15 | |
| 6 – 7 o'clock | 334 | 9.40 | 0 | 600 | 934 | 6.15 | |
| 7 – 8 o'clock | 810 | 9.40 | 0 | 20 | 830 | 6.15 | |
| 8 – 9 o'clock | 1104 | 9.40 | 104 | 0 | 1000 | 11.95 | *1 |
| 9 – 10 o'clock | 1286 | 9.40 | 300 | 0 | 986 | 11.95 | *1 |
| 10 – 11 o'clock | 1053 | 9.40 | 300 | 0 | 753 | 11.95 | *1 |
| 11 – 12 o'clock | 861 | 9.40 | 300 | 0 | 561 | 11.95 | *2 |
| 12 – 13 o'clock | 729 | 9.40 | 300 | 0 | 429 | 11.95 | *2 |
| 13 – 14 o'clock | 638 | 9.40 | 300 | 0 | 338 | 11.95 | *2 |
| 14 – 15 o'clock | 638 | 9.40 | 300 | 0 | 338 | 11.95 | *2 |
| 15 – 16 o'clock | 618 | 9.40 | 300 | 0 | 318 | 11.95 | *2 |
| 16 – 17 o'clock | 577 | 9.40 | 300 | 0 | 277 | 11.95 | *2 |
| 17 – 18 o'clock | 600 | 9.40 | 300 | 0 | 300 | 11.95 | *2 |
| 18 – 19 o'clock | 712 | 9.40 | 300 | 0 | 412 | 11.95 | *2 |
| 19 – 20 o'clock | 867 | 9.40 | 300 | 0 | 567 | 11.95 | *2 |
| 20 – 21 o'clock | 928 | 9.40 | 150 | 0 | 778 | 11.95 | *2 |
| 21 – 22 o'clock | 910 | 9.40 | 0 | 0 | 910 | 11.95 | |
| 22 – 23 o'clock | 835 | 9.40 | 0 | 165 | 1000 | 6.15 | |
| 23 – 24 o'clock | 671 | 9.40 | 0 | 329 | 1000 | 6.15 | |
| 0 – 1 o'clock | 478 | 9.40 | 0 | 522 | 1000 | 6.15 | |
| Total [kWh] | 16379 | | 3554 | 4554 | 17379 | | |
| Electric energy consumption fee [×10,000 yen/day ] | 15.40 | | | | | 15.31 | |
| Consumption rate | | | 98.7 | | | | |

*1: for peak shaving
*2: for reduction of daytime electric energy

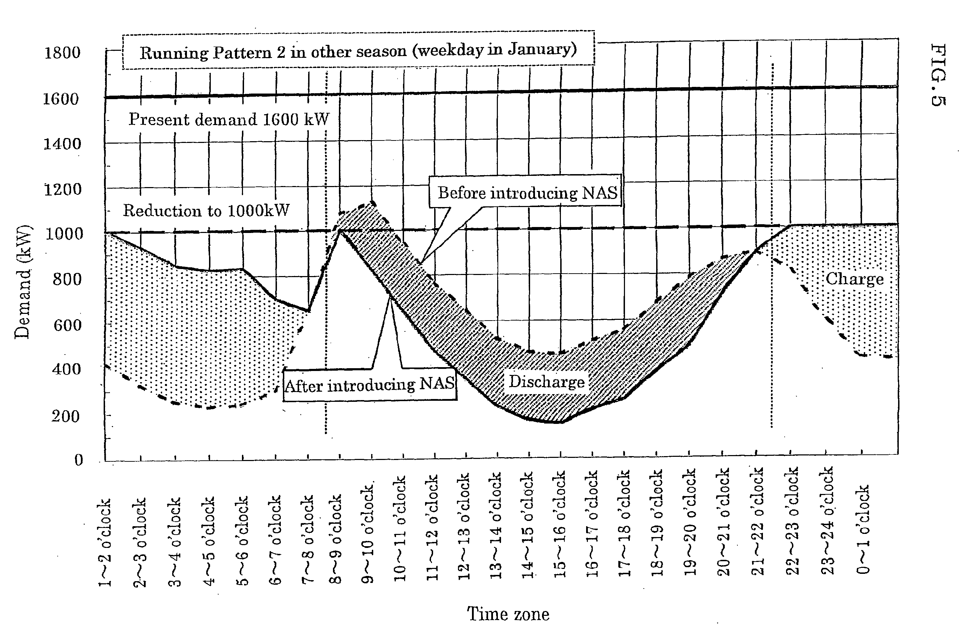

An example of running pattern in weekday in January is shown in Table 9 and Fig. 5 in a similar manner.

Table 9

[Running pattern 2 of electric energy storage system
in weekday in other season (May) (unit: kWh/h)]

| | Present state | | After introduction of electric energy storage system | | | | |
| --- | --- | --- | --- | --- | --- | --- | --- |
| | Purchased electricity | Unit fee for electricity | Discharged electricity | Charged electricity | Purchased electricity | Unit fee for electricity | |
| 1 – 2 o'clock | 423 | 9.40 | 0 | 577 | 1000 | 6.15 | |
| 2 – 3 o'clock | 325 | 9.40 | 0 | 600 | 925 | 6.15 | |
| 3 – 4 o'clock | 250 | 9.40 | 0 | 600 | 850 | 6.15 | |
| 4 – 5 o'clock | 225 | 9.40 | 0 | 600 | 825 | 6.15 | |
| 5 – 6 o'clock | 235 | 9.40 | 0 | 600 | 835 | 6.15 | |
| 6 – 7 o'clock | 300 | 9.40 | 0 | 400 | 700 | 6.15 | |
| 7 – 8 o'clock | 650 | 9.40 | 0 | 0 | 650 | 6.15 | |
| 8 – 9 o'clock | 1075 | 9.40 | 75 | 0 | 1000 | 11.95 | *1 |
| 9 – 10 o'clock | 1125 | 9.40 | 300 | 0 | 825 | 11.95 | *1 |
| 10 – 11 o'clock | 941 | 9.40 | 300 | 0 | 641 | 11.95 | *2 |
| 11 – 12 o'clock | 767 | 9.40 | 300 | 0 | 467 | 11.95 | *2 |
| 12 – 13 o'clock | 645 | 9.40 | 300 | 0 | 345 | 11.95 | *2 |
| 13 – 14 o'clock | 525 | 9.40 | 300 | 0 | 225 | 11.95 | *2 |
| 14 – 15 o'clock | 465 | 9.40 | 300 | 0 | 165 | 11.95 | *2 |
| 15 – 16 o'clock | 451 | 9.40 | 300 | 0 | 151 | 11.95 | *2 |
| 16 – 17 o'clock | 512 | 9.40 | 300 | 0 | 212 | 11.95 | *2 |
| 17 – 18 o'clock | 556 | 9.40 | 300 | 0 | 256 | 11.95 | *2 |
| 18 – 19 o'clock | 678 | 9.40 | 300 | 0 | 378 | 11.95 | *2 |
| 19 – 20 o'clock | 782 | 9.40 | 300 | 0 | 482 | 11.95 | *2 |
| 20 – 21 o'clock | 862 | 9.40 | 150 | 0 | 712 | 11.95 | *2 |
| 21 – 22 o'clock | 892 | 9.40 | 0 | 0 | 892 | 11.95 | |
| 22 – 23 o'clock | 812 | 9.40 | 0 | 188 | 1000 | 6.15 | |
| 23 – 24 o'clock | 590 | 9.40 | 0 | 410 | 1000 | 6.15 | |
| 0 – 1 o'clock | 434 | 9.40 | 0 | 566 | 1000 | 6.15 | |
| Total [kWh] | 14520 | | 3525 | 4541 | 15536 | | |
| Electric energy consumption fee [×10,000 yen/day ] | | 13.65 | | | | 13.47 | |
| Consumption rate | | | 97.9 | | | | |

*1:  for peak shaving

*2:  for reduction of daytime electric energy

In any of the examples, an electric energy consumption fee per day (weekday) was reduced after the electric energy storage system was introduced. In addition, since a nighttime fee is applied to Sundays, national holidays, and designated days during the end and the beginning of the year throughout the days in the charge system classified by seasons and time zones, an electric energy consumption fee is effectively reduced.

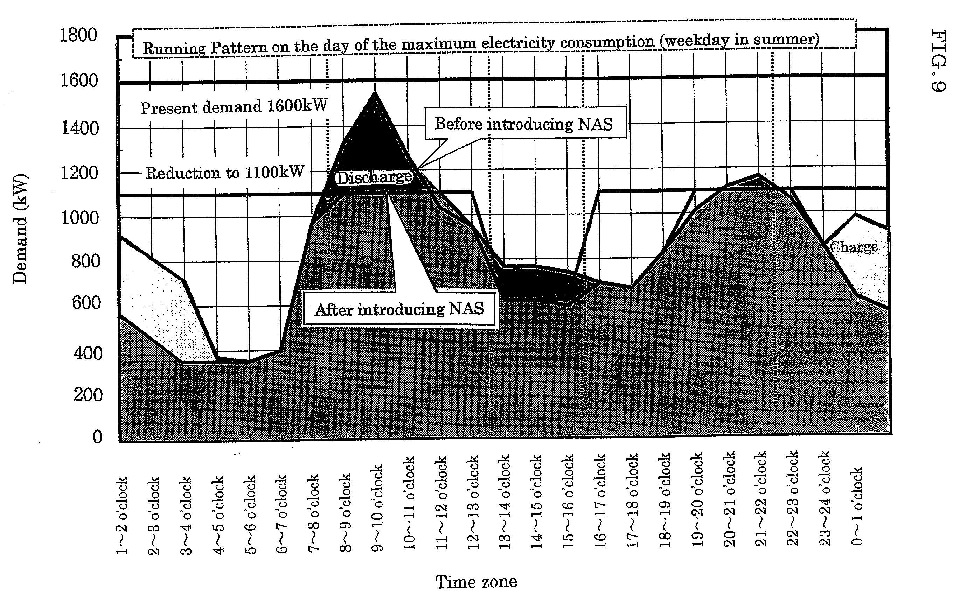

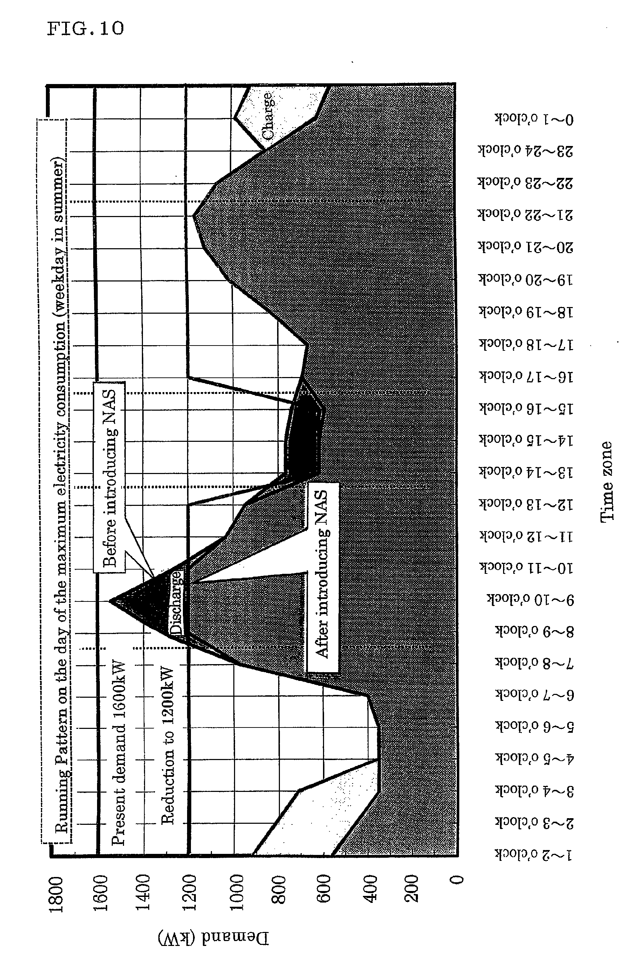

Next, an effect of introduction in the case of changing a consumption rate of an electric energy storage function of the same electric energy storage system is shown in the aforementioned Table 5 and Tables 10 and 11, and in Figs. 2, 9 and 10 using a contrast on the basis of Examples A - C. Example A shows an effect in the case that a system of 300kW × 7.2h was introduced and operated with a consumption rate of 91.4% in Table 5 and Fig. 2. Example B shows an effect in the case that the system was operated with a consumption rate of 63.1% in Table 5 and Fig. 2. Example C shows an effect in the case that the system was operated with a consumption rate of 45.4% in Table 11 and Fig. 10.

Table 10
[Running pattern 2-2 of electric energy storage system on the day
having the highest peak of electric energy consumption (unit: kWh/h)]
Electric energy storage system of 300kW × 7.2h

| | Present state | | After introduction of electric energy storage system | | | |
|---|---|---|---|---|---|---|
| | Purchased electricity | Unit fee for electricity | Discharged electricity | Charged electricity | Purchased electricity | Unit fee for electricity |
| 1 – 2 o'clock | 560 | 10.35 | 0 | 360 | 920 | 6.15 |
| 2 – 3 o'clock | 456 | 10.35 | 0 | 360 | 816 | 6.15 |
| 3 – 4 o'clock | 352 | 10.35 | 0 | 360 | 712 | 6.15 |
| 4 – 5 o'clock | 352 | 10.35 | 0 | 18 | 370 | 6.15 |
| 5 – 6 o'clock | 352 | 10.35 | 0 | 0 | 352 | 6.15 |
| 6 – 7 o'clock | 401 | 10.35 | 0 | 0 | 401 | 6.15 |
| 7 – 8 o'clock | 972 | 10.35 | 0 | 0 | 972 | 6.15 |
| 8 – 9 o'clock | 1325 | 10.35 | 225 | 0 | 1100 | 13.30 |
| 9 – 10 o'clock | 1543 | 10.35 | 443 | 0 | 1100 | 13.30 |
| 10 – 11 o'clock | 1264 | 10.35 | 164 | 0 | 1100 | 13.30 |
| 11 – 12 o'clock | 1033 | 10.35 | 0 | 0 | 1033 | 13.30 |
| 12 – 13 o'clock | 948 | 10.35 | 0 | 0 | 948 | 13.30 |
| 13 – 14 o'clock | 766 | 10.35 | 150 | 0 | 616 | 14.75 |
| 14 – 15 o'clock | 766 | 10.35 | 150 | 0 | 616 | 14.75 |
| 15 – 16 o'clock | 741 | 10.35 | 150 | 0 | 591 | 14.75 |
| 16 – 17 o'clock | 693 | 10.35 | 0 | 0 | 693 | 13.30 |
| 17 – 18 o'clock | 668 | 10.35 | 0 | 0 | 668 | 13.30 |
| 18 – 19 o'clock | 829 | 10.35 | 0 | 0 | 829 | 13.30 |
| 19 – 20 o'clock | 1014 | 10.35 | 0 | 0 | 1014 | 13.30 |
| 20 – 21 o'clock | 1119 | 10.35 | 19 | 0 | 1100 | 13.30 |
| 21 – 22 o'clock | 1163 | 10.35 | 63 | 0 | 1100 | 13.30 |
| 22 – 23 o'clock | 1063 | 10.35 | 0 | 0 | 1100 | 6.15 |
| 23 – 24 o'clock | 850 | 10.35 | 0 | 0 | 850 | 6.15 |
| 0 – 1 o'clock | 623 | 10.35 | 0 | 360 | 983 | 6.15 |
| Total [kWh] | 19853 | | 1364 | 1458 | 19985 | |
| Electric energy consumption fee [×10,000 yen/day ] | | 20.55 | | | | 21.50 |
| Consumption rate | | | 63.1 | | | |

Consumption rate        63.1%
(discharged electricity/
  system capacity)

Reduction of contract fee
500kW less        ¥680,000/month

Electric energy consumption fee
(Average of a week)
Before introduction        ¥205,500/day
After introduction        ¥201,800/day
Example of Sunday        ¥122,900/day
Reduction of fee        ¥25,600/day
                              ¥793,000/month

Effect per system scale
        ¥2,600/kW/month

Table 11

[Running pattern 2-3 of electric energy storage system on the day
having the highest peak of electric energy consumption (unit: kWh/h)]
Electric energy storage system of 300kW × 7.2h

| | Present state | | After introduction of electric energy storage system | | | |
|---|---|---|---|---|---|---|
| | Purchased electricity | Unit fee for electricity | Discharged electricity | Charged electricity | Purchased electricity | Unit fee for Electricity |
| 1 – 2 o'clock | 560 | 10.35 | 0 | 360 | 920 | 6.15 |
| 2 – 3 o'clock | 456 | 10.35 | 0 | 360 | 816 | 6.15 |
| 3 – 4 o'clock | 352 | 10.35 | 0 | 360 | 712 | 6.15 |
| 4 – 5 o'clock | 352 | 10.35 | 0 | 18 | 352 | 6.15 |
| 5 – 6 o'clock | 352 | 10.35 | 0 | 0 | 352 | 6.15 |
| 6 – 7 o'clock | 401 | 10.35 | 0 | 0 | 401 | 6.15 |
| 7 – 8 o'clock | 972 | 10.35 | 0 | 0 | 972 | 6.15 |
| 8 – 9 o'clock | 1325 | 10.35 | 125 | 0 | 1200 | 13.30 |
| 9 – 10 o'clock | 1543 | 10.35 | 343 | 0 | 1200 | 13.30 |
| 10 – 11 o'clock | 1264 | 10.35 | 64 | 0 | 1200 | 13.30 |
| 11 – 12 o'clock | 1033 | 10.35 | 0 | 0 | 1033 | 13.30 |
| 12 – 13 o'clock | 948 | 10.35 | 0 | 0 | 948 | 13.30 |
| 13 – 14 o'clock | 766 | 10.35 | 150 | 0 | 616 | 14.75 |
| 14 – 15 o'clock | 766 | 10.35 | 150 | 0 | 616 | 14.75 |
| 15 – 16 o'clock | 741 | 10.35 | 150 | 0 | 591 | 14.75 |
| 16 – 17 o'clock | 693 | 10.35 | 0 | 0 | 693 | 13.30 |
| 17 – 18 o'clock | 668 | 10.35 | 0 | 0 | 668 | 13.30 |
| 18 – 19 o'clock | 829 | 10.35 | 0 | 0 | 829 | 13.30 |
| 19 – 20 o'clock | 1014 | 10.35 | 0 | 0 | 1014 | 13.30 |
| 20 – 21 o'clock | 1119 | 10.35 | 0 | 0 | 1119 | 13.30 |
| 21 – 22 o'clock | 1163 | 10.35 | 0 | 0 | 1163 | 13.30 |
| 22 – 23 o'clock | 1063 | 10.35 | 0 | 0 | 1063 | 6.15 |
| 23 – 24 o'clock | 850 | 10.35 | 0 | 0 | 850 | 6.15 |
| 0 – 1 o'clock | 623 | 10.35 | 0 | 360 | 983 | 6.15 |
| Total [kWh] | 19853 | | 982 | 1458 | 20312 | |
| Electric energy consumption fee [×10,000 yen/day ] | | 20.55 | | | | 21.97 |
| Consumption rate | | | 45.4 | | | |

Consumption rate      45.4%
(discharged electricity/
 system capacity)

Effect per system scale
     ¥1,700/kW/month

Reduction of contract fee
400kW less      ¥544,000/month

Electric energy consumption fee
(Average of a week)
Before introduction      ¥205,500/day
After introduction      ¥206,200/day
Example of Sunday      ¥124,900/day
Reduction of fee      ¥16,900/day
                     ¥523,000/month

It is known from the comparison among the aforementioned Examples A - C that a reduced amount of contract electric power is different and a reduced amount of electric energy consumption in daytime is different according to the consumption rate of an electric energy storage function, there is a large difference in introduction effect. Therefore, it shows effectiveness of a proposal of an effective operating method having high cost performance to an electric energy consumer.

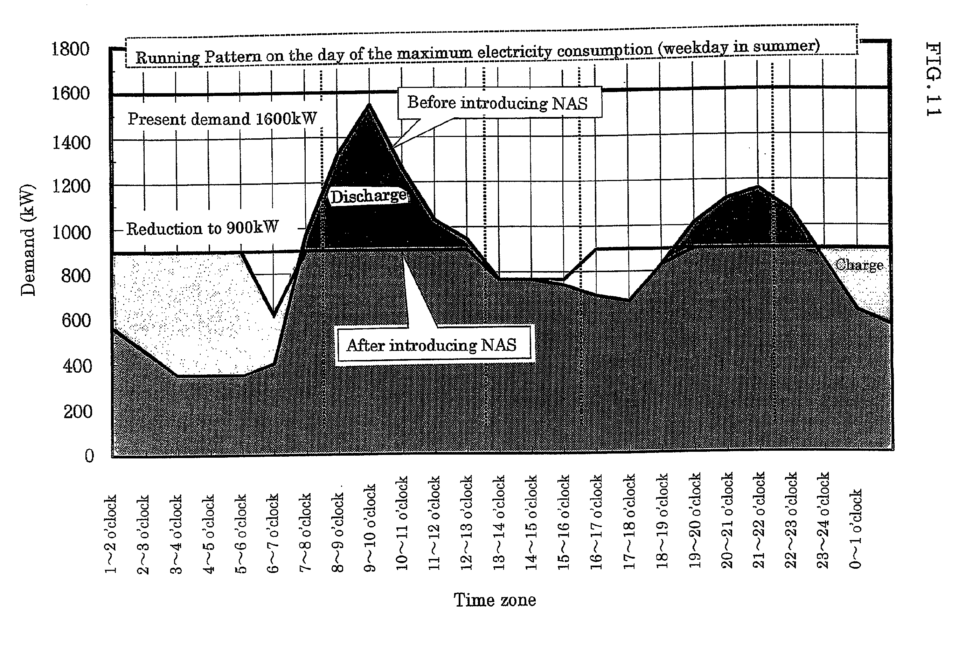

In addition, an operation effect in the case of conducting the same operation with a system scale of 600kW × 7.2h is shown in Table 12 and Fig. 11 as Example D. A contract amount is restricted by a necessary electric energy of nighttime charge if the system scale becomes large even if an electric energy load pattern of an electric energy consumer is the same. Therefore, it is found out that it shows low introduction effect in comparison with a system of 300kW × 7.2h in terms of a fee per system scale even if an apparent fee of an introduction effect is high.

Thus, it is very important to optimize a scale of a system according to a load pattern of an electric energy consumer.

### Table 12
[Running pattern 2-4 of electric energy storage system on the day having the highest peak of electric energy consumption (unit: kWh/h)]
Electric energy storage system of 600kW × 7.2h

|  | Present state | | After introduction of electric energy storage system | | | |
|---|---|---|---|---|---|---|
|  | Purchased electricity | Unit fee for electricity | Discharged electricity | Charged electricity | Purchased electricity | Unit fee for electricity |
| 1 – 2 o'clock | 560 | 10.35 | 0 | 340 | 900 | 6.15 |
| 2 – 3 o'clock | 456 | 10.35 | 0 | 444 | 900 | 6.15 |
| 3 – 4 o'clock | 352 | 10.35 | 0 | 548 | 900 | 6.15 |
| 4 – 5 o'clock | 352 | 10.35 | 0 | 548 | 900 | 6.15 |
| 5 – 6 o'clock | 352 | 10.35 | 0 | 548 | 900 | 6.15 |
| 6 – 7 o'clock | 401 | 10.35 | 0 | 214 | 615 | 6.15 |
| 7 – 8 o'clock | 972 | 10.35 | 72 | 0 | 900 | 6.15 |
| 8 – 9 o'clock | 1325 | 10.35 | 425 | 0 | 900 | 13.30 |
| 9 – 10 o'clock | 1543 | 10.35 | 643 | 0 | 900 | 13.30 |
| 10 – 11 o'clock | 1264 | 10.35 | 364 | 0 | 900 | 13.30 |
| 11 – 12 o'clock | 1033 | 10.35 | 133 | 0 | 900 | 13.30 |
| 12 – 13 o'clock | 948 | 10.35 | 48 | 0 | 900 | 13.30 |
| 13 – 14 o'clock | 766 | 10.35 | 0 | 0 | 766 | 14.75 |
| 14 – 15 o'clock | 766 | 10.35 | 0 | 0 | 766 | 14.75 |
| 15 – 16 o'clock | 741 | 10.35 | 0 | 0 | 741 | 14.75 |
| 16 – 17 o'clock | 693 | 10.35 | 0 | 0 | 693 | 13.30 |
| 17 – 18 o'clock | 668 | 10.35 | 0 | 0 | 668 | 13.30 |
| 18 – 19 o'clock | 829 | 10.35 | 0 | 0 | 829 | 13.30 |
| 19 – 20 o'clock | 1014 | 10.35 | 114 | 0 | 900 | 13.30 |
| 20 – 21 o'clock | 1119 | 10.35 | 219 | 0 | 900 | 13.30 |
| 21 – 22 o'clock | 1163 | 10.35 | 263 | 0 | 900 | 13.30 |
| 22 – 23 o'clock | 1063 | 10.35 | 163 | 0 | 900 | 6.15 |
| 23 – 24 o'clock | 850 | 10.35 | 0 | 0 | 900 | 6.15 |
| 0 – 1 o'clock | 623 | 10.35 | 0 | 277 | 900 | 6.15 |
| Total [kWh] | 19853 |  | 2443 | 2919 | 20378 |  |
| Electric energy consumption fee [×10,000 yen/day ] |  | 20.55 |  |  |  | 21.20 |
| Consumption rate |  |  | 113.1 |  |  |  |

Consumption rate     56.6%
(discharged electricity/
system capacity)

Reduction of contract fee
700kW less     ¥952,000/month

Electric energy consumption fee
(Average of a week)
Before introduction     ¥205,500/day
After introduction     ¥199,600/day
Example of Sunday     ¥125,300/day
Reduction of fee     ¥36,600/day
    ¥1,134,000/month

Effect per system scale
    ¥1,900/kW/month

These concepts can be summarized as follows:

The following conditions are necessary for the electric energy storage system to exhibit the effect of reducing an electric fee and to maximize the effect of the introduction thereof.

1) To research into conditions of electric energy consumption (purchased amount of electric energy) by the electric energy consumer for a predetermined period, e.g. at least past one year, so as to be used as base data for determining a scale of the electric energy storage system to be introduced or a running pattern after the introduction.

2) To research into an electric fee system which is arranged by an electric energy supplier and which the electric energy consumer can use and investigate an effect on an electric fee by load-leveling to select the optimum electric fee system.

3) To determine a scale of the electric energy storage system to be introduced on the basis of a date set for a contract electricity before the electric energy storage system is introduced, conditions of electric energy consumption on the day having the peak of the maximum load, a day having the highest peak of electric energy consumption, and a specification of the electric energy storage system expected to be introduced. To optimize a scale of the system to be introduced, not only an amount to be reduced of a contract electricity, but also a consumption rate of an electric energy storage function is investigated so as not to give an excessive capacity of equipment.

In this case, a consumption rate of electric energy storage function in the electric energy storage system is preferably 80% or more, and more preferably 90% or more.

4) To determine a running program for discharging the electric energy storage system in a time zone for high consumption of electric energy and for a high unit fee for consumed electric energy so as to reduce a purchased amount of electric energy and for charging the electric energy storage system in a time zone for a low unit fee for consumed electric energy. The running program is planned according to the past records of electric energy consumption. When an electric charge system to be applied after the introduction is classified by seasons and time zones, a plurality of running programs are preferably planned according to the electric charge system.

For example, for the tap water-supplying establishment shown in Table 2, the following three kinds of running patterns are planned because a charge system classified by seasons and time zones can be applied by introducing an electric energy storage system.

1. Weekday in summer:

- demand-control running for purchased electricity above a contract electricity and planned discharge in the peak time zone.
- charge in nighttime zone.

2. Weekday in the other season

- demand control running for purchased electricity above a contract electricity and planned discharge in daytime zones.

3. Sunday, national holiday, or the like

- demand control running for purchased electricity above a contract electricity.

This enables to run the electric energy storage system with making the most of its storage capacity through a year.

Since these running patterns change depending on a power load of an electric energy consumer, a running patter and the number of patterns are various depending on an electric energy consumer.

5) A running program determined by these investigations is preferably memorized by a control device for an electric energy storage system in advance. That is, it is possible and preferable to previously input a running pattern to a computer-control means according to designation on days fixed in a electric fee system, days treated as national holidays, etc., to run the electric energy storage system. In addition, conditions and a calendar are changed in every fiscal year for an electric fee contraction. Therefore, contents of change in an electric fee system and a calendar are regularly checked at the end of a fiscal year, and it is necessary to change a running program with conditions of purchased electricity in the preceding year. It is preferable that these running programs can be changed by a person controlling the operation or a third person with a communication circuit, or the like, because this is a very effective mean in view of concentrated control in the case that electric energy storage systems are introduced into a plurality of facilities since a knowledge of an electric fee system and an accurate grasp of power load conditions for optimum operation of an electric energy storage system.

6) There sometimes cause an unexpected situation for an estimated electric energy consumption at an electric energy consumer even if a running pattern is determined with a power load being estimated previously. It is necessary to frame a control algorithm where priority is given to the maintenance of a contract electricity.

7) It is preferable that a third person observes a power load and controls the electric energy storage system according to the load on the supposition that an unexpected power load conditions are caused at an electric energy consumer. That is, it becomes possible to intend to avoid loading in an emergency. For example, the electric energy storage system is introduced in a plurality of facilities in one establishment, concentrated control in one place enables more optimum operation.

As described above, according to the present invention, there is provided a method for running an electric energy storage system capable of minimizing a total electric fee with respect to an electric fee by an electric power company and an electric fee by the electric energy storage system in setting up an electric energy storage system at the electric energy consumer and in running the electric energy storage system.

## Claims

1. A method for running an electric energy storage system which is set up at an electric energy consumer and capable of controlling an electric energy to be purchased by the electric energy consumer by controlling charge and discharge, wherein a running pattern of charge and discharge of the electric energy storage system is previously programmed, and the run of the electric energy storage system is controlled on the basis of the previously programmed running pattern.

2. A method for running an electric energy storage system according to Claim 1, wherein the programmed running pattern is input in a computer-control means to control the run of the electric energy storage system by the computer-control means on the basis of the programmed running pattern.

3. A method for running an electric energy storage system according to Claim 1 or 2, wherein the running pattern is programmed so that a consumption rate of electric energy stored in the electric energy storage system becomes 80% or more.

4. A method for running an electric energy storage system according to any one of Claims 1 - 3, wherein an electric fee is always optimized by observing information on purchase of electric power by the electric energy consumer with a communication means and giving instruction to correct running conditions of the electric power storage system.

5. A method for running an electric energy storage system according to any one of Claims 1 - 4, wherein a scale of the electric energy storage system to be introduced is determined so that an electric energy consumption peak is not generated by shaving the electric energy consumption peak in a time zone having the highest peak of electric energy consumption in a situation of electric energy consumption by the electric energy consumer by increasing an amount of consumable electric energy by discharge running of the electric energy storage system and by charge running of the electric energy storage system in the other time zones.

6. A method for running an electric energy storage system according to any one of Claims 1 - 4, wherein a scale of the electric energy storage system to be introduced is determined so that an electric fee is reduced by increasing a rate of electric energy purchased by the electric energy consumer in a night time zone by discharge running of the electric energy storage system in a daytime zone and charge running of the electric energy storage system in a nighttime zone.

7. A method for running an electric energy storage system according to any one of Claims 1 - 6, wherein the electric energy storage system is a system using a sodium sulfur battery.

8. A method for running an electric energy storage system which is set up at an electric energy consumer and capable of controlling an electric energy to be purchased by the electric energy consumer by controlling charge and discharge, comprising the steps of:

   a. researching into conditions of electric energy consumption (purchased amount of electric energy) by the electric energy consumer for a predetermined period so as to be used as base data,
   b. researching into an electric fee system which is arranged by an electric energy supplier and which the electric energy consumer can use and investigate an effect on an electric fee by load-leveling to select the optimum electric fee system,

c. determining a scale of the electric energy storage system to be introduced on the basis of a date set for a contract electricity before the electric energy storage system is introduced, conditions of electric energy consumption on the day having the maximum load, a day having the highest peak of the electric energy consumption, and a specification of the electric energy storage system expected to be introduced,

d. determining a running program for discharging the electric energy storage system in a time zone for high consumption of electric energy and for a high unit fee for consumed electric energy so as to reduce a purchased amount of electric energy and for charging the electric energy storage system in a time zone for a low unit fee for consumed electric energy, and

e. running the electric energy storage system on the basis of the running program.

9. A method for running an electric energy storage system according to Claim 8, wherein the running program for the electric energy storage system is input to a computer-control means to run the electric energy storage system by the computer-control means on the basis of the running program.

10. A method for running an electric energy storage system according to Claim 8 or 9, wherein a scale of the electric energy storage system and the running program are determined so that a consumption rate of electric energy stored in the electric energy storage system becomes 80% or more.

11. A method for running an electric energy storage system according to any one of Claims 8 - 10, wherein an electric fee is always optimized by observing information on purchase of electric power by the electric energy consumer with a communication means and giving instruction to correct running conditions of the electric power storage system.

12. A method for running an electric energy storage system according to any one of Claims 8 - 11, wherein a scale of the electric energy storage system to be introduced is determined so that an electric energy consumption peak is not generated by shaving the electric energy consumption peak in a time zone having the highest peak of electric energy consumption in a situation of electric energy consumption by the electric energy consumer by increasing an amount of consumable electric energy by discharge running of the electric energy storage system and by charge running of the electric energy storage system in the other time zones.

13. A method for running an electric energy storage system according to any one of Claims 8 - 11, wherein a scale of the electric energy storage system to be introduced is determined so that an electric fee is reduced by increasing a rate of electric energy purchased by the electric energy consumer in a night time zone by discharge running of the electric energy storage system in a daytime zone and charge running of the electric energy storage system in a nighttime zone.

14. A method for running an electric energy storage system according to any one of Claims 8 - 13, wherein the electric energy storage system is a system using a sodium sulfur battery.

FIG.1

Running Pattern on the day of the maximum electricity consumption (weekday in summer)

Present demand 1600 kW

Before introducing NAS

Reduction to 1000kW

After introducing NAS

Charge

Discharge

Demand (kW)

Time zone

0~1 o'clock
23~24 o'clock
22~23 o'clock
21~22 o'clock
20~21 o'clock
19~20 o'clock
18~19 o'clock
17~18 o'clock
16~17 o'clock
15~16 o'clock
14~15 o'clock
13~14 o'clock
12~13 o'clock
11~12 o'clock
10~11 o'clock
9~10 o'clock
8~9 o'clock
7~8 o'clock
6~7 o'clock
5~6 o'clock
4~5 o'clock
3~4 o'clock
2~3 o'clock
1~2 o'clock

1800
1600
1400
1200
1000
800
600
400
200
0

FIG.2

Running Pattern on the day of the maximum electricity consumption (weekday in summer)

Present demand 1600 kW

Reduction to 1000kW

Before introducing NAS

After introducing NAS

Discharge

Charge

Demand (kW)

Time zone

1~2 o'clock
2~3 o'clock
3~4 o'clock
4~5 o'clock
5~6 o'clock
6~7 o'clock
7~8 o'clock
8~9 o'clock
9~10 o'clock
10~11 o'clock
11~12 o'clock
12~13 o'clock
13~14 o'clock
14~15 o'clock
15~16 o'clock
16~17 o'clock
17~18 o'clock
18~19 o'clock
19~20 o'clock
20~21 o'clock
21~22 o'clock
22~23 o'clock
23~24 o'clock
0~1 o'clock

1800
1600
1400
1200
1000
800
600
400
200
0

FIG.3

FIG.4

Running Pattern 1 in other season (weekday in May)

Present demand 1600 kW

Reduction to 1000kW

Before introducing NAS

After introducing NAS

Charge

Discharge

Demand (kW)

1800
1600
1400
1200
1000
800
600
400
200
0

1~2 o'clock
2~3 o'clock
3~4 o'clock
4~5 o'clock
5~6 o'clock
6~7 o'clock
7~8 o'clock
8~9 o'clock
9~10 o'clock
10~11 o'clock
11~12 o'clock
12~13 o'clock
13~14 o'clock
14~15 o'clock
15~16 o'clock
16~17 o'clock
17~18 o'clock
18~19 o'clock
19~20 o'clock
20~21 o'clock
21~22 o'clock
22~23 o'clock
23~24 o'clock
0~1 o'clock

Time zone

FIG.5

FIG.6

FIG.7

## FIG.8

| Electricity consumer |
|---|
| Research into conditions of electricity consumption for the past one year<br>· Conditions of electricity consumption on a day of maximum demand<br>· Conditions of electricity consumption on a day of maximum electricity consumption |

| Electricity supplier |
|---|
| Available electric fee system |
| Selection of optimum fee system having load-leveling effect and peak sharing effect<br>· Basic fee (¥/kW)<br>· Meter rate fee (¥/kWh) |

| Electric energy storage system |
|---|
| Optimization of scale of system<br>· Required amount of electric energy storage (kWh)<br>· Maximum out put (kW) × Continuous time (h) |

| Method for operating system |
|---|
| Determination of running program having large effect in reducing fee<br>· Each running day<br>Discharge output × Time zone<br>Charge input × Time zone |
| Automatic run by running program |
| Emergency run by changing program |

| Observation of operation conditions of system |
|---|
| Review of running program by changing optimum electric fee system and conditions |
| Change of running program for unexpected demand |

**System flow from setting up to storage system operation of electric energy**

FIG. 9

EP 1 215 796 A2

Running Pattern on the day of the maximum electricity consumption (weekday in summer)

Present demand 1600kW

Before introducing NAS

Reduction to 1100kW

Discharge

After introducing NAS

Charge

Demand (kW)

Time zone

FIG.10

Running Pattern on the day of the maximum electricity consumption (weekday in summer)

Before introducing NAS

Present demand 1600kW

Reduction to 1200kW

Discharge

Charge

After introducing NAS

Demand (kW)

1800
1600
1400
1200
1000
800
600
400
200
0

Time zone

1~2 o'clock
2~3 o'clock
3~4 o'clock
4~5 o'clock
5~6 o'clock
6~7 o'clock
7~8 o'clock
8~9 o'clock
9~10 o'clock
10~11 o'clock
11~12 o'clock
12~13 o'clock
13~14 o'clock
14~15 o'clock
15~16 o'clock
16~17 o'clock
17~18 o'clock
18~19 o'clock
19~20 o'clock
20~21 o'clock
21~22 o'clock
22~23 o'clock
23~24 o'clock
0~1 o'clock

FIG.11

Running Pattern on the day of the maximum electricity consumption (weekday in summer)

Before introducing NAS

Present demand 1600kW

Reduction to 900kW

Discharge

After introducing NAS

Charge

Demand (kW)

1800
1600
1400
1200
1000
800
600
400
200
0

Time zone

1~2 o'clock
2~3 o'clock
3~4 o'clock
4~5 o'clock
5~6 o'clock
6~7 o'clock
7~8 o'clock
8~9 o'clock
9~10 o'clock
10~11 o'clock
11~12 o'clock
12~13 o'clock
13~14 o'clock
14~15 o'clock
15~16 o'clock
16~17 o'clock
17~18 o'clock
18~19 o'clock
19~20 o'clock
20~21 o'clock
21~22 o'clock
22~23 o'clock
23~24 o'clock
0~1 o'clock